Europäisches Patentamt

European Patent Office

Office européen des brevets

(11) Numéro de publication: **0 585 996 A1**

## DEMANDE DE BREVET EUROPEEN

(21) Numéro de dépôt: **93202296.5**

(51) Int. Cl.5: **H04J 3/16, H04L 12/56**

(22) Date de dépôt: **04.08.93**

(30) Priorité: **06.08.92 FR 9209401**

(43) Date de publication de la demande:
**09.03.94 Bulletin 94/10**

(84) Etats contractants désignés:
**DE FR GB IT**

(71) Demandeur: **T.R.T. TELECOMMUNICATIONS RADIOELECTRIOUES ET TELEPHONIOUES**
**88, rue Brillat Savarin**
**F-75013 Paris(FR)**

(84) **FR**

(71) Demandeur: **PHILIPS ELECTRONICS N.V.**

**Groenewoudseweg 1**
**NL-5621 BA Eindhoven(NL)**

(84) **DE GB IT**

(72) Inventeur: **Damien, Souad**
**Société Civile S.P.I.D.,**
**156, Boulevard Haussmann**
**F-75008 Paris(FR)**

(74) Mandataire: **Pyronnet, Jacques et al**
**Société Civile S.P.I.D.**
**156, Boulevard Haussmann**
**F-75008 Paris (FR)**

(54) **Dispositif de réarrangement de débits de circuits virtuels en transmission à multiplexage temporel asynchrone.**

(57) Le dispositif comporte une mémoire de cellules MC comportant r tampons de circuits virtuels (MC1,...MC2). Les cellules sortantes de MC, sur un multiplex portant DNO sont lues par un circuit de sélection d'adresse de lecture (21). Selon l'invention, le circuit comporte aussi des premiers moyens de correspondance : canal activé-rang de priorité (5, 9, 12), une table de synthèse de rythmes (13), des deuxièmes moyens de correspondance : fréquence de signal synthétisé-débit de canal activé (5, 11, 13), un automate de constitution d'un échéancier des canaux activés (16), et des moyens de choix du canal le plus prioritaire, à chaque temps cellule (12, 16, 18, 19).

FIG.1

EP 0 585 996 A1

L'invention concerne un dispositif de réarrangement de débits pour des canaux de cellules incidents en technique temporelle asynchrone (circuits virtuels ATM) présents en entrée d'une mémoire de cellules MC, supportés par des conduits numériques séparés ou par un multiplex portant d'entrée DNI, ladite mémoire MC étant composée d'une pluralité de r mémoires tampons de circuits virtuels, chaque cellule d'un canal activé étant rangée dans la mémoire tampon de circuit virtuel dont l'identité est reconnaissable dans l'en-tête de ladite cellule, les cellules sortantes de la mémoire MC sur un multiplex portant de sortie DNO à débit de cellules F étant lues dans lesdites mémoires tampons de circuits virtuels par un circuit de sélection d'adresse de lecture.

L'utilisateur de ce dispositif peut être un abonné, qui dispose d'un petit nombre de canaux, mais il est avantageusement le gestionnaire d'un assez grand nombre de circuits virtuels, par exemple 128 ou 256, établis entre plusieurs abonnés auquel cas le dispositif peut être placé dans un central de télécommunications en amont des réseaux de brassage.

Dans une voie de transmission ATM chaque cellule, de longueur fixe, comporte un en-tête qui contient, entre autres, le numéro d'identification du circuit virtuel (ou canal) auquel elle appartient: L'en-tête est suivi d'un corps de message, porteur de l'information utile, de longueur fixe. Sur la voie de transmission, de telles cellules se suivent sans interruption, à une cadence fixe donnée, ce qui définit une périodicité d'apparition de cellule sur la voie de transmission considérée, T, encore dénommée : temps cellule. Le débit de cellules utiles sur la voie de transmission peut varier. Pour assurer la périodicité T précitée, lorsqu'il n'y a pas de message à transmettre, un bourrage est effectué au moyen de cellules vides, de même format que les cellules utiles et porteuses d'une information conventionnelle, dépourvue de signification. La même information d'identification se retrouve dans les en-têtes de cellules irrégulièrement espacées, qui ont la même destination.

Pour le dispositif selon l'invention, les voies de transmission ATM à considérer, en amont, peuvent être multiples, chacune d'elles étant le siège d'un canal unique, être groupées en un multiplex portant unique, supporté par un seul conducteur ou plusieurs conducteurs en parallèle, ou encore un groupement de ces deux types de voies de transmission.

Le but recherché, le problème à résoudre, est de réarranger les canaux incidents précités de façon à les regrouper sur un multiplex portant de sortie DNO, et à régulariser le débit de chacun de ces canaux, ces débits, supposés connus ou qui sont à tout le moins mesurables à partir d'une fréquence d'apparition moyennée des cellules, étant généralement différents. Les débits à prévoir pour les sources susceptibles d'alimenter les différents canaux s'étagent selon une large gamme, d'ailleurs en cours de normalisation, qui peut varier de quelques kilobits par seconde (kb/s) à quelques centaines de mégabits par seconde (Mb/s). Par ailleurs, on suppose pour ce qui suit, qu'au moins l'un de ces débits, dit débit de canal maximal DCmax peut dépasser la moitié du débit maximal, F, du multiplex portant de sortie DNO. Ceci implique la présence de cellules adjacentes (successives) dans le multiplex DNO, pour de tels débits maxima. Par contre, pour les débits de canaux DC tels que : $DC < F/2$, pour lesquels la présence de groupements de cellules adjacentes n'est pas nécessaire, l'invention permet d'éviter ce type de groupements jugés indésirables et d'optimiser la régularité de l'espacement des cellules émises pour chaque canal, compte tenu de la présence des autres canaux sur le même multiplex.

De la demande de brevet français 2 653 284 on connaît un dispositif de régularisation de débit de circuits virtuels empruntant une voie de transmission ATM. Dans ce dispositif, des moyens de commande sont prévus, agencés de sorte que les cellules à émettre sur la voie sortante soient lues dans les mémoires tampon dans un ordre tel que les cellules issues d'une même mémoire tampon de circuit virtuel soient espacées en moyenne au moins d'un intervalle déterminé pour ce circuit virtuel. Pour obtenir la régularisation des débits, il est fait appel, dans cette demande, à une solution essentiellement logicielle qui ne permet pas d'obtenir des vitesses de fonctionnement élevées, étant donné les très forts débits d'information mis en jeu. Ceci peut poser problème notamment lors des reconfigurations du système suite à une modification d'état ou de débit des canaux activés.

Un but de l'invention est d'obtenir un réarrangement de canaux ATM en évitant une solution répressive qui consisterait à provoquer le rejet et la perte de cellules visant à éviter un engorgement du réseau ATM.

Un autre but de l'invention est de réarranger les canaux ATM de façon à retarder le moins possible ces canaux à l'occasion de la régularisation de leurs débits.

Encore un autre but est de permettre des reconfigurations rapides de l'ensemble des canaux ATM à réarranger.

Selon l'invention, le problème technique indiqué ci-dessus est résolu et les inconvénients de l'art antérieur sont atténués ou supprimés grâce au fait que le dispositif décrit au premier paragraphe est remarquable en ce qu'il comprend :

- des premiers moyens de correspondance qui établissent une correspondance bijective entre chaque canal activé et un rang de priorité prédéterminé,
- une table de synthèse de rythmes apte à fournir des signaux en impulsions à toutes les fréquences représentatives des débits de cellules ATM possibles pour les canaux,
- des deuxièmes moyens de correspondance qui activent, en sortie de la table de synthèse de rythmes, uniquement les signaux en impulsions à fréquences correspondant à des débits de canaux activés,
- un automate de constitution d'un échéancier des canaux activés qui recense, à chaque temps cellule $T_j$ les impulsions reçues de ladite table de synthèse de rythmes et qui leur associe les canaux activés correspondants et leur priorité associée,
- et des moyens de choix pour élire, à chaque temps cellule suivant $T_{j+1}$ le canal le plus prioritaire à partir de la priorité la plus grande prélevée dans ledit automate et en déduire une commande de lecture correspondante vers ledit circuit de sélection d'adresse de lecture.

La génération, pour chaque débit d'un canal activé d'un signal dont le rythme (la fréquence) est égal(e) au débit affiché de ce canal, ou encore à son débit moyen, permet, en réglant à ce rythme l'émission des cellules en sortie de la mémoire tampon relative à ce canal, d'obtenir la régularisation recherchée. Cette régularisation optimale peut être ainsi obtenue à coup sûr en présence d'un seul canal activé. Cependant, lorsque plusieurs canaux sont activés, comme c'est toujours le cas en pratique, le processus de régularisation se complique par le fait que, de temps en temps, des demandes d'émission simultanées se produisent, pour des canaux différents. L'établissement d'un ordre de priorités, qui se traduit à tout instant par une correspondance bijective entre l'ensemble des canaux activés et un ensemble de valeurs (rangs) de priorités, selon un critère préétabli, permet de reconstituer sur le multiplex de sortie DNO la nécessaire chronologie d'émission des cellules. De préférence, le critère précité consiste en ce que la priorité d'un canal activé est d'autant plus élevée (faible valeur de priorité), que le débit de ce canal est grand. Ce choix est celui qui permet d'obtenir la meilleure régularité pour ce qui est de la période d'émission des cellules de chaque canal, et il induit un retard, dans la mémoire tampon associée à chaque canal, d'autant plus grand que le débit de ce canal est faible.

Un mode de réalisation préféré de l'invention est remarquable en ce que lesdits premiers moyens de correspondance comportent, en cascade, à partir d'une interface d'entrée de ladite mémoire de cellules MC : une interface programmable, une table de canaux qui fournit, pour chaque canal, un numéro associé NC1, .... NCr, le débit et l'état (activé ou pas), un automate d'attribution de priorité et une table de priorités établissant une correspondance bijective entre une première rangée de s numéros de canaux activés NCA1, ..., NCAs (s ≤ r) et une deuxième rangée de s valeurs de priorité distinctes VP1, ..., VPs.

La transmission ATM est destinée aux plus larges domaines d'application et les débits à prévoir sont de l'ordre de plusieurs centaines, et par exemple étagés entre quelques kb/s et quelques centaines de Mb/s. Pour effectuer la synthèse d'un nombre égal de fréquences rythmes, un mode de réalisation avantageux de l'invention est remarquable en ce que ladite table de synthèse de rythmes comporte un bus de programmation connecté à n registres reliés chacun à un compteur cyclique qui reçoit un signal d'horloge HB (à fréquence N et période $\tau$) pour engendrer n fréquences de base $f_1$, $f_2$, ..., $f_n$ (valeurs de fréquence décroissant de 1 à n) telles que $f_1$ soit la fréquence-rythme maximale s'identifiant au débit maximal DCmax possible d'un canal, et que : $f_n > f_1/2$, les autres fréquences, de valeurs inférieures, étant obtenues par divisions successives au moyen de q-1 diviseurs par deux de chacune des fréquences de base $f_1$, $f_2$, ..., $f_n$, le nombre total de fréquences ainsi générées étant égal à : $n \times q = p$.

Cette conception de la table de synthèse de rythmes constitue un moyen simple et efficace pour engendrer un grand nombre de fréquences régulièrement réparties, le nombre n pouvant être de l'ordre de plusieurs dizaines et le nombre q d'étages de diviseurs par 2 disposés en cascade, supérieur à 10.

Un autre mode de réalisation de l'invention compatible avec les précédents est remarquable en ce que lesdits deuxièmes moyens de correspondance entre rythmes et canaux activés sont constitués, pour au moins chaque canal activé, par un registre d'index relié à un décodeur qui comporte en sortie p positions, parmi lesquelles une seule position significative du débit du canal est activée, par un bus de décodage à p conducteurs DN1 à DNp dont chacun est relié à la sortie d'une porte logique OU dont les entrées sont reliées à des sorties homologues desdits décodeurs par un bus de rythmes, à p conducteurs, FN1 à FNp, issu de ladite table de synthèse de rythmes et par un bus d'alimentation dudit automate de constitution d'un échéancier, à p conducteurs, $A_1$ à $A_p$, dont chaque conducteur de rang i, $A_i$, est relié aux conducteurs homologues DNi et FNi, par l'intermédiaire d'une porte logique ET.

Pour garantir que l'échéance d'émission d'une cellule ne soit jamais perdue mais seulement différée par le jeu des priorités établies entre les canaux activés, un autre mode de réalisation de l'invention est remarquable en ce que lesdits moyens de choix du canal le plus prioritaire comportent une file d'attente des canaux non élus, reliée par un bus bidirectionnel audit automate de constitution d'un échéancier, conçue pour emmagasiner, à chaque temps cellule, les numéros de priorité acquis précédemment dans ledit échéancier, qui n'ont pas encore été élus et pour les amalgamer, à chaque temps cellule suivant, aux nouveaux numéros de priorité recensés, dans l'échéancier, de façon à constituer un ensemble de priorités, propre a chaque temps cellule, au sein duquel est prélevé, pour fourniture à un organe d'élection du canal correspondant, le numéro de canal le plus prioritaire.

La description qui suit en regard des dessins annexés, le tout donné à titre d'exemple non limitatif, fera bien comprendre comment l'invention peut être réalisée.

La figure 1 est un schéma synoptique du dispositif de réarrangement de débits selon l'invention.

La figure 2 est le schéma synoptique d'un mode de réalisation des deuxièmes moyens de correspondance entre rythmes et canaux activés, utilisable dans le dispositif de la figure 1.

La figure 3A représente un exemple de la façon dont le sous ensemble particulier d'impulsions peut être engendré par ladite table de synthèse de rythmes.

La figure 3B représente, selon le même exemple qu'à la figure 3A, des diagrammes de temps qui montrent la répartition temporelle d'un sous ensemble particulier d'impulsions engendrées par la table de synthèse de rythmes du dispositif de la figure 1.

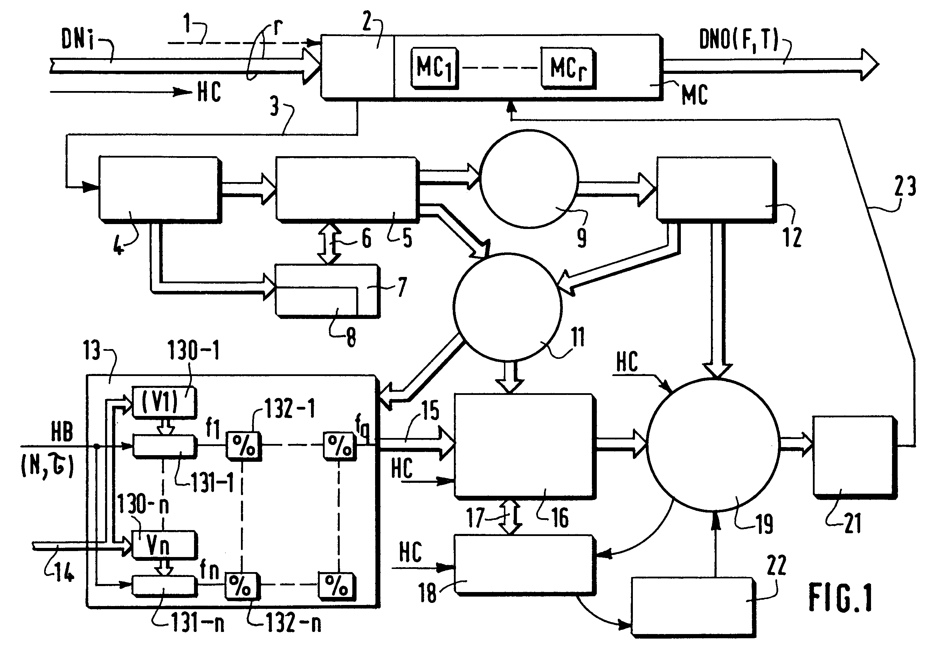

Le dispositif de la figure 1 est, de préférence, censé se trouver dans un central de télécommunications. Il est conçu pour traiter des cellules selon la technique ATM, de préférence sous la forme d'un circuit spécifique (ASIC). A la partie située en haut, à gauche du schéma, est représenté un multiplex portant d'entrée DNI qui véhicule, en série ou en parallèle un certain nombre de canaux ATM. D'autre part le conducteur 1, représenté en trait interrompu, symbolise une ou plusieurs autres voies d'entrée indépendantes, porteuses chacune d'un canal ATM. Chacun des r canaux d'entrée (DNI ou 1), référencés NC1, ..., NCr, est le siège d'un débit $DC_i$ (i indice muet variant de 1 à r), certains de ces débits pouvant être égaux. En pratique, les débits $DC_i$ indiquent des débits maximums que l'utilisateur ne doit pas dépasser : par contre, on suppose ces débits fluctuants et irréguliers, ce qui implique la présence de cellules vides selon un débit variable, et une fréquence d'apparition erratique, dans chaque canal.

L'invention vise à réarranger les débits des r canaux précités en les régularisant selon le critère de priorité préétabli, ces canaux étant émis, avec des débits régularisés, sur un multiplex portant de sortie DNO à fréquence F et période T. Par le mot régularisés, il faut entendre que le débit de plus haute priorité (priorité de rang 1) se manifeste, sur DNO, avec une période d'apparition constante des cellules utiles du canal associé, alors que, pour tout ou partie des autres priorités, il existe une légère variation de la période d'apparition des cellules utiles, rendue en tout état de cause nécessaire par l'imbrication des différents débits qui doivent coexister sur le multiplex DNO. La règle précitée s'applique strictement aux débits inférieurs à F/2. Dans le cas contraire, c'est-à-dire lorsqu'il existe dans le multiplex DNO un débit supérieur à F/2, la régularisation de ce débit se traduira par l'apparition d'un motif répétitif d'apparition des cellules utiles dans lequel il existe des cellules utiles adjacentes.

Les r canaux d'entrée sont fournis à une mémoire de cellules MC qui se compose d'une interface mémoire d'entrée 2 et d'au moins r mémoires tampons de circuits virtuels, MC1, MC2, ..., MCr. Chaque cellule entrante est aiguillée, de façon connue, par l'interface 2, vers la mémoire tampon qui correspond à son canal, à partir de son identité de canal reconnaissable dans son en-tête, ce qui équivaut à une opération d'adressage simple. Cette simplicité de canal est aussi transmise par un conducteur 3 de l'interface mémoire 2, à une interface programmable 4, ce qui fournit en permanence à cette dernière l'information consistant à savoir quels sont les canaux qui sont actifs en entrée de la mémoire MC. Par ailleurs l'interface 4 reçoit aussi l'information relative au débit de chaque canal, par exemple par comptage des cellules entrantes et moyennage au cours du temps. L'information de débits peut aussi être programmée, en 4, ou reçue de l'extérieur, de façon non représentée.

Les débits sont adaptés au système de transmission utilisé, par exemple le système numérique synchrone SDH. Par ailleurs le nombre r de canaux entrants peut atteindre 256, soit le nombre maximum de canaux admis en technique ATM, les numéros de canaux NC1, ..., NCr étant exprimés sous forme d'octets. Les informations relatives aux canaux entrants sont fournies à une table de canaux 5 qui les traduit, pour chacun, sous la forme d'un numéro parmi r numéros NC1, ..., NCr, une valeur de débit, et un état, parmi deux états : activé ou non activé, ce qui se traduit au niveau électronique simplement par la présence d'un 1 ou d'un 0 logique. Pour qu'un canal soit activé, il faut deux conditions, qui sont : le canal considéré doit être présent parmi les r canaux d'entrée et ce canal doit être validé, par programmation, par l'interface 4. La partie complémentaire de la figure 1 qui est encore à décrire ne concerne que les canaux activés, soit s numéros de canal, NCA1, ..., NCAs, parmi NC1, ..., NCr (s ≤ r). La table 5 est reliée par un bus bidirectionnel 6 à un organe de contrôle de la cohérence 7 qui comporte un bloc d'alarmes 8 et qui reçoit aussi de l'information en provenance de l'interface programmable 4. L'organe 7 est régi par des

4

paramètres programmables selon la configuration du système : il a pour fonctions de vérifier notamment que tous les débits sont inférieurs au débit maximum DCmax prévu pour l'un des canaux, que la somme des débits des canaux est compatible avec le débit du système de transmission (débit inférieur au débit F de DNO et typiquement égal à 0,85 F), et que le nombre de canaux activés à la fois est compatible avec la configuration du réseau. Le non respect des conditions précitées provoque le déclenchement d'une alarme dans le bloc 8, ce qui peut conduire à la modification de la programmation de l'interface 4. L'information sur les canaux contenue dans la table 5 est fournie à un automate d'attribution de la priorité 9 et à un automate 11 de correspondance des rythmes générés par rapport aux canaux activés. L'automate 9 a pour fonction d'engendrer, pour chaque numéro de canal activé NCA1, ..., NCAs, un numéro de priorité correspondant, selon un certain critère. Le critère choisi consiste à associer une priorité d'autant plus élevée (un rang ou valeur de priorité d'autant plus petit(e)) que le débit de ce canal est grand. Ainsi, le canal à débit le plus élevé est affecté du numéro de priorité 1. Pour des canaux ayant même débit, une hiérarchie de priorités est établie, de façon arbitraire ou par programmation, ou selon un critère différent, ne portant pas sur des débits. On obtient ainsi s numéros de canaux activés tous différents, auxquels correspondent de façon bijective s numéros de priorité différents VP1, ..., VPs. L'automate 9 fournit les couples de valeurs $NCA_1$-$VP_1$ (1 indice muet variant de 1 à s) à une table de priorité 12. L'ensemble comprenant l'interface programmable 4, la table de canaux 5 associée à l'organe de contrôle de la cohérence 7, l'automate d'attribution de la priorité 9 et la table de priorités 12, constitue des premiers moyens de correspondance.

On a indiqué ci-dessus que l'information relative aux canaux (numéro de chaque canal avec son débit et son état) est aussi aiguillée vers l'automate 11. Par cette dérivation, on vise à établir une deuxième correspondance de chaque canal non plus avec une valeur de priorité comme décrit ci-dessus, mais avec une valeur de fréquence fixe (ou rythme), obtenue par synthèse, et qui a une valeur égale ou à tout le moins aussi proche que possible du débit de cellules de ce canal. Si la synthèse d'un grand nombre de rythmes exactement égaux aux débits possibles pour les canaux s'avère difficile à réaliser, au moins pour certaines valeurs de débits, on peut prévoir d'associer pour ces débits des rythmes à fréquences de préférence légèrement supérieures à ces débits. Dans ces conditions, la possibilité de fournir un grand nombre (p) de rythmes régulièrement espacés, par exemple 1000 rythmes compris entre 1 kHz et 1 GHz permettra d'établir la deuxième correspondance débit-rythme recherchée, quels que soient le nombre (inférieur à 256) et les valeurs de débits à traiter (par exemple comprises entre 1 kb/s et 1 Gb/s).

L'élément fondamental nécessaire à l'établissement de cette deuxième correspondance est une table de synthèse de rythmes 13. Cette table comporte des registres 130-1, ..., 130-n qui sont chargés à une valeur de comptage prédéterminée au moyen d'un bus 14 (par exemple à 12 conducteurs), ces valeurs ($V_1$, ..., $V_n$, par valeurs croissantes) étant toutes différentes, de préférence régulièrement échelonnées, et telles que le rapport $V_n/V_1$ soit légèrement supérieur à 2. Les valeurs $V_1$, ..., $V_n$ sont fournies, à titre de valeurs de comptage maximum à des compteurs cycliques 131-1, ..., 131-n respectivement. Chaque compteur cyclique reçoit un signal d'horloge externe HB (à fréquence N et période $\tau$) issu par exemple d'un générateur d'horloge à quartz (non représenté). Il en résulte des signaux impulsionnels de fréquences $f_1$, ..., $f_n$ (par valeurs décroissantes) en sortie des compteurs.

La fréquence $f_1$ est la plus élevée et la fréquence $f_n$ est légèrement supérieure à $f_1/2$. Chaque compteur 131-1, ..., 131-n, est relié à un diviseur par 2, 132-1, ..., 132-n, qui fournissent des signaux impulsionnels à fréquence $f_1/2$, ..., $f_n/2$, respectivement. Chaque diviseur par 2 est lui-même suivi d'un diviseur par 2 et ainsi de suite, jusqu'aux fréquences les plus basses recherchées après q divisions par 2 successives. On obtient ainsi le plan de fréquences qui convient pour l'établissement de la deuxième correspondance précitée. A titre d'application numérique, si le plus haut débit à envisager est égal à : DCmax = 622 Mbit/s, on peut choisir un signal HB à : N = 50 MHz et $V_1$ = 31, $V_2$ = 32, ..., $V_{34}$ = 67 (n = 34) ce qui entraîne :

$f_1$ = 622 MHz, $f_2$ = 605 MHz, $f_3$ = 558 MHz, ..., $f_{34}$ = 316 MHz.

La granularité des débits est inférieure à 3%.

Avec 13 étages de diviseurs par 2 (q = 13) à la suite de chaque compteur cyclique, le débit le plus faible peut être de : $316/2^{13}$, soit moins de 40 kbits/s.

On voit qu'avec 34 compteurs et 13 étages de divisions (n x q = p = 442), on peut couvrir facilement une gamme de débits allant de moins de 40 kbits/s à 622 Mbits/s avec une granularité inférieure à 3%.

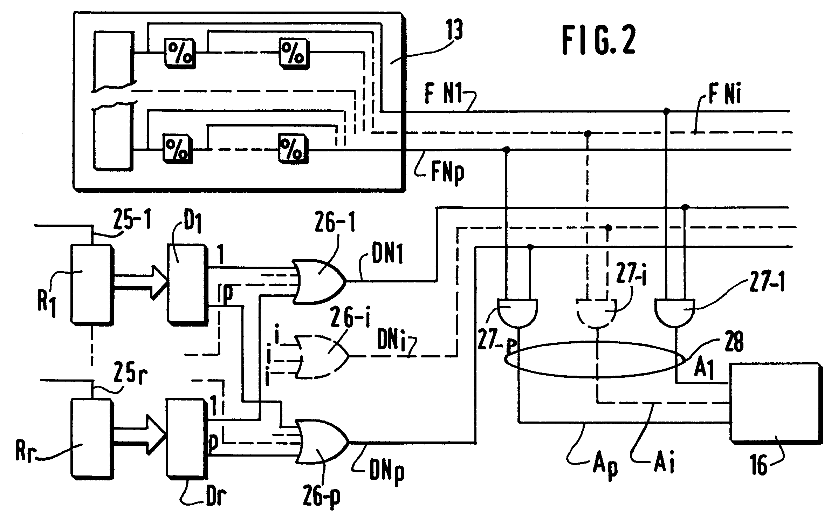

Parmi ces 442 fréquences, l'automate 11 sélectionne les u fréquences qui sont égales ou très proches par valeurs supérieures aux débits des s canaux activés. Etant donné que parmi ces derniers certains peuvent avoir le même débit, le nombre u est inférieur ou égal à s. Les u signaux impulsionnels sélectionnés par tout moyen connu, notamment comme décrit plus haut en référence à la figure 2, sont transmis au moyen de la liaison 15 qui peut être un bus à p conducteurs, à un automate de constitution d'un échéancier des canaux activés, référencé 16, qui reçoit aussi le signal d'horloge de base HC, dont la période s'identifie au temps cellule T. L'horloge HC est issue du multiplex portant DNI ou DNO. A chaque période du signal HC, c'est-à-dire pendant chaque temps cellule (sur DNO notamment) l'automate 16 peut recevoir soit aucune impulsion, soit une, soit plusieurs impulsions. En moyenne, il en reçoit moins d'une, à chaque durée T, moyennant la condition que le multiplex de sortie DNO ne doit pas être saturé. A ce stade, le but recherché est la prise en compte de chaque impulsion reçue en 16, par émission sur DNO, le plus rapidement possible, de la plus ancienne cellule contenue (éventuellement) dans l'une des mémoires tampons MC1, ..., MCr, précisément la mémoire relative au même canal qui est aussi à l'origine de l'émission par la table de synthèse de rythmes 13, de l'impulsion considérée. C'est précisément cette fonction que permet de réaliser la partie du dispositif de la figure 1 qui reste à décrire. Si, lors de sa réception dans l'automate 16, l'impulsion en question est seule présente, l'émission de la cellule à partir de la mémoire MC correspondante est effectuée immédiatement, c'est-à-dire pendant le temps cellule qui suit celui de la réception de l'impulsion en 16, auquel cas l'établissement d'une hiérarchie de priorités pour les canaux ne serait même pas nécessaire. Cependant, l'arrivée des impulsions en 16 a lieu le plus souvent de façon irrégulière en ce sens que par moments, dans la trame que constitue la succession des intervalles de temps T, plusieurs imulsions arrivent pendant la même durée T. Il faut donc, pour que toutes les impulsions soient prises en compte, mettre en oeuvre deux fonctions qui sont : le choix (l'élection) de l'impulsion (c'est-à-dire du canal) la plus prioritaire et la mémorisation de la ou des impulsions restantes pour la (les) soumettre audit choix, y compris les impulsions éventuelles nouvellement arrivées lors du temps cellule suivant. Cette accumulation momentanée d'impulsions, qui se traduit par des décalages dans le temps des cellules à émettre des différents canaux, par rapport à leur instant d'émission théorique, a comme pendant (contrepartie) l'occurrence occasionnelle d'intervalles de temps T pendant lesquels aucune impulsion n'est mémorisée ni n'arrive dans l'automate 16, auquel cas est commandée l'émission d'une cellule vide, notée $\phi$, sur le multiplex de sortie DNO. L'émission de cellules vides sur DNO traduit d'ailleurs simplement le fait que ce multiplex DNO n'est pas saturé.

La mémorisation de la (des) impulsion(s) non élue(s), du ou des canaux correspondants est effectuée, sous forme de valeurs de priorité, par l'intermédiaire d'un bus bidirectionnel 17, dans une file d'attente 18 des canaux non élus, qui reçoit aussi le signal d'horloge HC. Cette information (à supposer qu'elle soit présente en 18) est restituée, à chaque temps d'horloge, à l'automate 16. L'automate 16 reçoit aussi en provenance de la table de priorités 12 l'information des couples de valeurs $NCA_1$-$VP_1$ soit directement (non représenté) soit par l'intermédiaire de l'automate 11, et opère une double transformation : impulsion-canal (ou canaux) correspondant(s) puis canal (canaux)-valeur(s) de priorité correspondante(s) pour chaque impulsion reçue de la table 13 lors d'une durée T. Il s'ensuit, en 16 un premier sous ensemble de valeurs de priorités auquel est amalgamé un deuxième sous ensemble de valeurs de priorités en provenance de la file d'attente 18, de façon à constituer un ensemble de y valeurs de priorités. La plus haute priorité est isolée de cet ensemble pour émission de la cellule correspondante par MC (à supposer qu'il y en ait au moins une dans cette mémoire de cellules). Les y-1 priorités restantes sont ensuite transférées en 18 et le cycle se répète au temps cellule suivant.

L'élection d'un canal s'effectue physiquement par transmission, à chaque temps T, de la valeur de priorité élue en 16, VPE, à un organe d'élection du canal le plus prioritaire 19 qui reçoit par ailleurs lui aussi les couples de valeurs $NCA_1$-$VP_1$ depuis la table de priorités 12. En 19 s'opère la conversion de VPE à NCAE qui est le numéro de canal le plus prioritaire, transmis à un circuit de sélection d'adresse de lecture 21, d'où il est transmis sous forme d'un ordre de lecture, sur un conducteur 23 à la mémoire tampon des cellules du même canal activé, dans la mémoire MC. Il s'ensuit l'émission sur le multiplex de sortie DNO de la plus ancienne cellule de la mémoire tampon considérée ou, si cette dernière était vide, de l'émission d'une cellule vide.

En variante, moyennant une légère complication du dispositif, il est possible, par transmission des deux premières priorités de l'ensemble y et de deux ordres de lecture subséquents à la mémoire MC de provoquer l'émission d'une cellule de deuxième priorité en remplacement de la première lorsque la mémoire tampon relative à cette première priorité est vide, étant entendu que cette lecture d'une cellule de deuxième priorité est inhibée dans le cas général où une cellule de première priorité est présente et peut donc être émise.

En l'absence, lors d'un temps T, de valeur de priorité en 16 (y = 0), cela se traduit, par tout moyen connu à la portée de l'homme de métier, par l'intermédiaire des éléments 19, 21 et MC, par l'émission d'une cellule vide sur DNO. La durée qui sépare la sélection d'un numéro de priorité en 16 et l'émission d'une cellule sur DNO est inférieure à un temps cellule T.

Lorsqu'un débit de canal dépasse la moitié du débit du multiplex DNO, ce débit étant référencé DCM, cela se traduit, dans le multiplex de sortie DNO par la présence de cellules successives (adjacentes sur une échelle de temps). Plus précisément le débit DCM peut s'écrire sous la forme :

$$DCM = \frac{k_0 \, m + k_1 \, (m-1) + \ldots + k_{m-1}}{k_0 \, m + k_1 \, (m-1) + \ldots + k_{m-1} + \sum_{i=0}^{m-1} k_i} xF$$

$k_0, \ldots, k_m$ entiers.

La relation précédente est optimale en ce sens qu'elle exprime physiquement une répartition de cellules telle, dans le multiplex DNO, qu'il n'y a que des cellules vides isolées sur ce multiplex, et qu'en conséquence la valeur de m, qui est le nombre maximal de cellules successives d'un même canal est ainsi rendue minimale. Le dispositif selon l'invention permet d'obtenir la répartition conforme à la relation précédente lorsque DCM est le débit du canal le plus prioritaire. Plus généralement, on peut prévoir de limiter à une valeur maximale P le nombre de cellules successives du même canal admissibles sur le multiplex DNO, le nombre P étant le plus souvent une contrainte imposée par le réseau. Selon l'invention, le respect de la valeur maximale P peut être obtenu par interposition d'un limiteur 22 disposé entre les éléments 18 et 19. Selon ce perfectionnement, un comptage de priorités successives identiques est effectué en 19. Tant que la valeur de comptage reste inférieure à P-1, le déroulement des opérations en 16, 18, 19 reste celui décrit ci-dessus. Par contre, lorsque cette valeur atteint P-1, l'organe 19 envoie à la file d'attente 18 un ordre de transmission au limiteur 22 de la plus haute priorité qu'il contient, différente de celle qui a donné lieu à la succession des P-1 cellules précédentes. Un forçage de cette plus haute priorité est ensuite effectué en 19 par le limiteur 22, lors du temps cellule suivant, en même temps qu'est inhibée une transmission de priorité depuis l'automate 16. Si la file d'attente est vide, le limiteur 22 commande alors l'émission d'une cellule vide.

Le dispositif de la figure 1 présente l'avantage de permettre une reconfiguration rapide de l'ensemble des canaux activés, typiquement en une durée de deux temps cellules (2T). Pour cela, il faut prévoir de doubler la capacité de la table de priorités 12, c'est-à-dire d'y instaurer un deuxième ensemble de numéros de canaux à associer, de façon bijective, à un deuxième ensemble de valeurs de priorités. Lors de l'établissement d'un nouveau canal activé ou du changement d'état d'un des canaux (changement de débit ou rupture d'un canal déjà établi), sous réserve que les nouvelles valeurs assurent encore la cohérence entre la programmation de la table de canaux 5 et la configuration du système, l'automate d'attribution de la priorité 9 met à jour la nouvelle correspondance bijective entre les deuxièmes ensembles précités de numéros de canaux et de valeurs de priorités en 12. On notera que cette opération se fait en un temps cellule pour des débits pouvant aller jusqu'au Gb/s, en technologie CMOS 1 $\mu$, et qu'il est possible d'utiliser des technologies encore plus rapides telles que la technologie ECL par exemple. Pendant l'élaboration de la nouvelle table de correspondances numéro de canal-valeur de priorité, le dispositif continue de fonctionner selon l'ancienne table de correspondances. Au top de l'horloge rythme du multiplex portant DNO qui suit la fin de cette élaboration, le canal nouveau ou modifié est pris en compte par l'automate 11 de correspondance des rythmes générés par rapport aux canaux activés et, plus généralement, la nouvelle table de correspondance : numéros de canaux-valeurs de priorités est prise en compte par l'ensemble du dispositif (les éléments 16 et 19 notamment). Le dispositif effectue ainsi une reconfiguration de l'ensemble des canaux activés dans un délai de 1 à 2 temps cellule du multiplex portant, ce qui est une durée très faible par rapport au temps d'établissement d'un canal.

Dans le dispositif de la figure 1, l'automate 11 constitue des deuxièmes moyens de correspondance entre rythmes et canaux activés, dont un mode de réalisation est décrit ci-dessous en référence à la figure 2. Comme décrit plus haut, la table 5 contient, pour chaque numéro de canal NC1, ..., NCr, son débit et son état. En pratique, une liste de débits autorisés pour les canaux est à disposition, par exemple 256 valeurs différentes. Ces valeurs de débits correspondent à des valeurs d'index comprises entre 0 et 255, à supposer que l'index soit codé sur 8 bits. Chaque valeur d'index correspond à son tour à un rythme géré par l'automate de correspondance des rythmes générés par rapport aux canaux activés.

La correspondance entre les numéros de canaux et les numéros d'index (éventuellement un même numéro d'index pour plusieurs canaux ayant le même débit) peut se faire de la manière suivante :

Chaque valeur d'index correspondant à au moins un canal activé (bit de validation activé dans le champ état de la table 5) est chargée dans un registre $R_1$, ..., $R_r$ (le nombre de registres est par exemple égal à 256 si le numéro de canal est codé sur huit bits, ou peut se limiter à une valeur inférieure, s, égale au nombre de canaux activés simultanément au maximum). Chaque registre, qui reçoit par ailleurs le bit de validation précité servant à son activation ou sa désactivation, sur un conducteur 25-1, ..., 25-r respectivement, est relié par un bus à un décodeur $D_1$, ..., $D_r$ dont le nombre de positions de sortie est égal au nombre (supérieur ou égal à r) de valeurs possibles de l'index. Pour ne pas compliquer l'exposé, on suppose que le nombre de valeurs possibles de l'index est égal à p (p = n.q étant le nombre de rythmes générés par la table 13). Chaque décodeur n'est activé que si le bit de validation du canal correspondant est activé. Les conducteurs de sortie des décodeurs $D_1$, ..., $D_r$ sont trois états et sont reliés à un bus commun DNI, ..., DNp, par l'intermédiaire de p portes OU logiques 26-1, ..., 26-p, dont chacune comporte r entrées reliées à autant de sorties respectives de même rang des décodeurs $D_1$, ..., $D_r$. Lorsqu'un (quelconque) décodeur active une position de sortie de décodage (une seule sortie à la fois pouvant être activée), un conducteur DNi, parmi DN1, ..., DNp se trouve activé et, réciproquement, le conducteur DNi n'est désactivé que si aucun décodeur ne l'a activé, ce qui implique alors une valeur de débit qui n'est utilisée par aucun canal.

Par ailleurs, les signaux engendrés par la table de synthèse de rythmes 13 sont réunis en un bus de sortie $FN_1$, ..., $FN_p$. Les deux bus DNi, FNi, sont connectés entre eux, par l'intermédiaire de portes ET logiques 27-1, ..., 27-p de façon à engendrer un bus 28, $A_1$, ..., $A_i$, ..., $A_p$, relié à l'automate 16 de la figure 1, et qui constitue une réalisation possible de la liaison 15 de la figure 1. Dans le bus 28, le conducteur de rang i est relié à la sortie de la porte ET 27-i dont les deux entrées sont reliées aux conducteurs DNi et FNi respectivement.

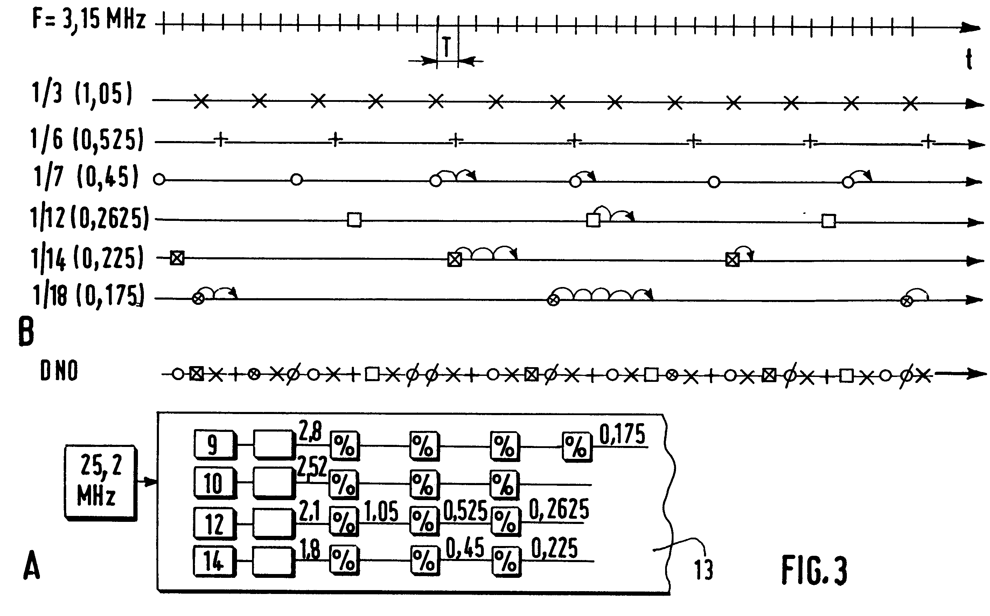

La figure 3 illustre, pour fixer les idées, une application numérique simplifiée pour un ensemble de six canaux activés à réarranger par le dispositif de la figure 1.

En A, la table de synthèse de rythmes 13, représentée avec arrachement, fournit les 6 fréquences nécessaires. A cet effet la table reçoit un signal d'horloge externe HB à fréquence N = 25,2 MHz. Quatre registres sont chargés avec les nombres 9, 10, 12 et 14. Il en résulte, en sortie des compteurs reliés à ces registres les fréquences de base 2,8 MHz ; 2,52 MHz : 2,1 MHz : 1,8 MHz respectivement. Les s = 6 fréquences requises sont : $F_1$ = 175 kHz, obtenue après 4 divisions successives par 2 de la fréquence mère 2,8 MHz : $F_2$ = 1,05 MHz : $F_3$ = 525 kHz : $F_4$ = 262,5 kHz (première, deuxième, troisième division successive par 2 de la fréquence mère 2,1 MHz) : $F_5$ = 450 kHz : $F_6$ = 225 kHz (deuxième, troisième division successive par 2 de la fréquence mère 1,8 MHz).

Le multiplex portant de sortie étant à la fréquence : F = 3,15 MHz, les fréquences $F_1$ à $F_6$ représentent respectivement les fractions suivantes de la fréquence-débit F : 1/18, 1/3, 1/6, 1/12, 1/7, 1/14. Il s'ensuit un taux d'occupation du multiplex portant de sortie égal à :

1/3 + 1/6 + 1/7 + 1/12 + 1/14 + 1/18 = 0,853

soit 85,3 %.

La priorité croissant avec le débit, la répartition, dans le multiplex de sortie DNO, des cellules des canaux associés aux fréquences $F_1$ à $F_6$, est celle représentée à la figure 3B.

Pour le canal de débit F/3, la répartition est parfaitement régulière. Ceci reste vrai aussi pour le canal de débit F/6 qui est le deuxième débit le plus élevé, sous multiple du précédent. Pour les autres canaux, de débits plus faibles, il y a des reports d'émission de cellule, représentés par des demi-cercles sur l'axe des temps. Ces reports, qui peuvent être multiples ont, statistiquement, une amplitude d'autant plus élevée que le débit est faible. Sur la figure 3B le multiplex portant de sortie DNO est représenté, chaque canal possédant un symbole de cellule particulier, avec un retard d'un temps cellule, par rapport à l'échéance des impulsions relatives aux différents canaux représentée à la partie haute de la figure, soit le temps nécessaire au fonctionnement des éléments 16, 18, 19, 21. Sur ce multiplex DNO, l'émission d'une cellule vide est représentée par le symbole $\phi$.

L'affectation de priorités croissantes pour des débits croissants offre l'avantage de perturber de façon à peu près égale tous les canaux, en valeur relative, par le fait que les perturbations les plus nombreuses apparaissent pour les périodes d'émission les plus grandes soit une variation relative de la période d'émission de cellules de chaque canal sensiblement constante.

Le dispositif selon l'invention peut être réalisé sous forme d'un ASIC (Application Specific Integrated Circuit en anglais) et d'un générateur d'horloge qui fournit le signal HB. Ce dispositf présente l'avantage de permettre une reconfiguration rapide du système, de l'ordre de 1 à 2 temps cellule pour des débits en sortie supérieurs au Gb/s, ce qui permet de réaliser des systèmes offrant une flexibilité de débit quasi instantanée. Un autre avantage est de permettre une solution intégrée tout en offrant une programmation totale des débits souhaités et un échelonnement fin de ces derniers. Par exemple, pour un multiplex portant de 155 Mb/s et avec un circuit ASIC réalisé en technologie CMOS 1 $\mu$, il est possible d'obtenir un échelonnement de l'ordre de quelques kb/s aux bas débits et une centaine de valeurs intermédiaires pour les débits correspondant aux rythmes les plus élevés compris entre $f_1$ et $f_1/2$. On peut par ailleurs, en configurant différemment la table de synthèse de rythmes (nombre différent de diviseurs à chaque rangée), définir l'échelonnement en fonction du débit le plus adéquat pour la réalisation.

L'algorithme effectué par le dispositif selon l'invention est indépendant de la réalisation du reste de l'équipement où il doit être inséré. Il n'y est pas tenu compte de la vitesse d'arrivée des informations. Il est même envisageable de tamponner volontairement un canal pour l'émettre momentanément à un débit moindre afin de pallier un engorgement prévisible du réseau, et, après que le risque d'engorgement a cessé, d'augmenter rapidement le débit de ce canal. On notera enfin l'indépendance totale du dispositif par rapport au réseau de transmission utilisé.

**Revendications**

1. Dispositif de réarrangement de débits pour des canaux de cellules incidents en technique temporelle asynchrone (circuits virtuels ATM) présents en entrée d'une mémoire de cellules MC, supportés par des conduits numériques séparés ou par un multiplex portant d'entrée DNI, ladite mémoire MC étant composée d'une pluralité de r mémoires tampons de circuits virtuels (MC1, MC2, ..., MCr), chaque cellule d'un canal activé étant rangée dans la mémoire tampon de circuit virtuel dont l'identité est reconnaissable dans l'en-tête de ladite cellule, les cellules sortantes de la mémoire MC sur un multiplex portant de sortie DNO à débit de cellules F (temps cellule $1/F = T$) étant lues dans lesdites mémoires tampons de circuits virtuels par un circuit de sélection d'adresse de lecture, caractérisé en ce qu'il comprend :
   - des premiers moyens de correspondance qui établissent une correspondance bijective entre chaque canal activé et un rang de priorité prédéterminé,
   - une table de synthèse de rythmes apte à fournir des signaux en impulsions à toutes les fréquences représentatives des débits de cellules ATM possibles pour les canaux,
   - des deuxièmes moyens de correspondance qui activent, en sortie de la table de synthèse de rythmes, uniquement les signaux en impulsions à fréquences correspondant à des débits de canaux activés,
   - un automate de constitution d'un échéancier des canaux activés qui recense, à chaque temps cellule $T_j$ les impulsions reçues de ladite table de synthèse de rythmes et qui leur associe les canaux activés correspondants et leur priorité associée,
   - et des moyens de choix pour élire, à chaque temps cellule suivant $T_{j+1}$ le canal le plus prioritaire à partir de la priorité la plus grande prélevée dans ledit automate et en déduire une commande de lecture correspondante vers ledit circuit de sélection d'adresse de lecture.

2. Dispositif de réarrangement de débits selon la revendication 1, caractérisé en ce que lesdits premiers moyens de correspondance comportent, en cascade, à partir d'un interface d'entrée de ladite mémoire de cellules MC : une interface programmable, une table de canaux qui fournit, pour chaque canal, un numéro associé NC1, ..., NCr, le débit et l'état (activé ou pas), un automate d'attribution de priorité et une table de priorités établissant une correspondance bijective entre une première rangée de s numéros de canaux activés NCA1, ..., NCAs ($s \leq r$) et une deuxième rangée de s valeurs de priorité distinctes VP1, ..., VPs.

3. Dispositif de réarrangement de débits selon la revendication 1 ou 2, caractérisé en ce que ladite table de synthèse de rythmes comporte un bus de programmation connecté à n registres reliés chacun à un compteur cyclique qui reçoit un signal d'horloge HB (à fréquence N et période $\tau$) pour engendrer n fréquences de base $f_1$, $f_2$, ..., $f_n$ (valeurs de fréquence décroissant de 1 à n) telles que $f_1$ soit la fréquence-rythme maximale s'identifiant au débit maximal DCmax possible d'un canal, et que : $f_n > f_1/2$, les autres fréquences, de valeurs inférieures, étant obtenues par divisions successives au moyen de q-1 diviseurs par deux de chacune des fréquences de base $f_1$, $f_2$, ..., $f_n$, le nombre total de fréquences ainsi générées étant égal à : $n \times q = p$.

4. Dispositif de réarrangement de débits selon la revendication 3 dont la table de synthèse de rythmes reçoit un signal d'horloge HB à 50 MHz fourni par un générateur d'horloge à quartz, selon lequel : $f_1 = 622$ MHz, n est de l'ordre de 35 et la fréquence-rythme minimale $f_p$ est de l'ordre de 40 kHz, le nombre p de fréquences-rythmes fournies étant de l'ordre de 450.

5. Dispositif de réarrangement de débits selon l'une des revendications 1 à 4, caractérisé en ce que lesdits deuxièmes moyens de correspondance entre rythmes et canaux activés sont constitués, pour au moins chaque canal activé, par un registre d'index relié à un décodeur qui comporte en sortie p positions, parmi lesquelles une seule position significative du débit du canal est activée, par un bus de décodage à p conducteurs DN1 à DNp dont chacun est relié à la sortie d'une porte logique OU dont les entrées sont reliées à des sorties homologues desdits décodeurs par un bus de rythmes, à p conducteurs, FN1 à FNp, issu de ladite table de synthèse de rythmes et par un bus d'alimentation dudit automate de constitution d'un échéancier, à p conducteurs, $A_1$ à $A_p$, dont chaque conducteur de rang i, $A_i$, est relié aux conducteurs homologues DNi et FNi, par l'intermédiaire d'une porte logique ET.

6. Dispositif de réarrangement de débits selon l'une des revendications 1 à 5, caractérisé en ce que lesdits moyens de choix du canal le plus prioritaire comportent une file d'attente des canaux non élus, reliée par un bus bidirectionnel audit automate de constitution d'un échéancier, conçue pour emmagasiner, à chaque temps cellule, les numéros de priorité acquis précédemment dans ledit échéancier, qui n'ont pas encore été élus et pour les amalgamer, à chaque temps cellule suivant, aux nouveaux numéros de priorité recensés, dans l'échéancier, de façon à constituer un ensemble de priorités, propre à chaque temps cellule, au sein duquel est prélevé, pour fourniture à un organe d'élection du canal correspondant, le numéro de canal le plus prioritaire.

7. Dispositif de réarrangement de débits selon la revendication 6, caractérisé en ce qu'il comporte un limiteur du nombre maximum m de cellules consécutives du même canal qu'il est possible d'émettre sur ledit multiplex de sortie DNO, relié d'une part à ladite file d'attente, d'autre part audit organe d'élection de canal le plus prioritaire, une liaison supplémentaire étant en outre prévue entre ces deux derniers éléments.

8. Dispositif de réarrangement de débits selon l'une des revendications 1 à 7 selon lequel la priorité d'un canal activé est d'autant plus élevée que le débit de ce canal est grand.

9. Dispositif de réarrangement de débits selon l'une des revendications 2 à 8, caractérisé en ce que, étant à reconfiguration rapide, ladite table de correspondance bijective comporte un deuxième ensemble de numéros de canaux à associer, de façon bijective, à un deuxième ensemble de valeurs de priorités.

FIG.1

EP 0 585 996 A1

FIG.2

FIG.3

EP 0 585 996 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | EP-A-0 438 009 (P. BOYER ET AL.) <br> * colonne 1, ligne 16 - ligne 26; revendications 1,2 * <br> --- | 1-9 | H04J3/16 <br> H04L12/56 |
| A | WO-A-87 03762 (BELL COMMUNICATIONS RESEARCH INC.) <br> * page 2, ligne 5 - ligne 33 * <br> * page 14, ligne 5 - ligne 21 * <br> * revendication 1 * <br> --- | 1-9 | |
| D,A | FR-A-2 653 284 (ALCATEL CIT.) <br> * revendication 1 * <br> ----- | 1 | |

| | | | DOMAINES TECHNIQUES RECHERCHES (Int.Cl.5) |
|---|---|---|---|
| | | | H04J <br> H04Q <br> H04L |

Le présent rapport a été établi pour toutes les revendications

| Lieu de la recherche | Date d'achèvement de la recherche | Examinateur |
|---|---|---|
| LA HAYE | 1 Décembre 1993 | Perez Perez, J |